# EUROPÄISCHE PATENTSCHRIFT

(11) **EP 3 365 714 B1**
(45) Veröffentlichungstag und Bekanntmachung des Hinweises auf die Patenterteilung: **26.05.2021**
(21) Anmeldenummer: 16784849.8
(22) Anmeldetag: 18.10.2016
(51) Int. Cl.: G02B 6/44, H01S 3/067, H01S 3/04, H01S 3/042

(54) **FASERHALTERUNGSEINHEIT UND FASERAUFNAHMEELEMENT**
FIBER-RETAINING UNIT AND FIBER-HOLDING ELEMENT
UNITÉ DE MAINTIEN DE FIBRE ET ÉLÉMENT DE RÉCEPTION DE FIBRE

(30) Priorität: 21.10.2015 DE 102015013689
(43) Veröffentlichungstag der Anmeldung: 29.08.2018
(73) Patentinhaber: TRUMPF Laser GmbH, 78713 Schramberg (DE)
(72) Erfinder: BUDNICKI, Aleksander, 79194 Gundelfingen (DE); ENZMANN, Andreas, 78052 Villingen-Schwenningen (DE); JANSEN, Florian, 78054 Villingen-Schwenningen (DE); LIERMANN, Martin, 78052 Villingen-Schwenningen (DE); OVERBUSCHMANN, Johannes, 77756 Hausach (DE)
(74) Vertreter: Grättinger Möhring von Poschinger Patentanwälte Partnerschaft mbB
(86) Internationale Anmeldenummer: PCT/EP2016/074970
(87) Internationale Veröffentlichungsnummer: WO 2017/067924

(56) Entgegenhaltungen:
- WO-A2-01/91252
- FR-A1- 2 837 290
- US-A1- 2003 133 686
- US-A1- 2004 223 721
- US-B2- 9 014 220
- Anonymous: "Micro Block Fiber Alignment Solutions" In: "MELLES GRIOT 1997-98: OPTICS, FIBER OPTICS; TABLES & HARDWARE, LASERS, INSTRUMENTS, LAB ACCESSORIES", 1997, MELLES GRIOT, USA, XP055342695, Seite 294, Seite 294

## Beschreibung

Die vorliegende Erfindung betrifft Faserlasersysteme und insbesondere Faserhalterungseinheiten sowie speziell zur Faserkühlung ausgebildete Faserkühlkassetten sowie darin eingesetzte Faseraufnahmeelemente.

In kontinuierlich oder lange Laserpulse emittierenden Faserlaserverstärkersystemen werden Signal- und Pumpstrahlung typischerweise monolithisch über passive Transportfasern der Faserverstärkereinheit zu- und abgeführt.

In Kurzpuls- und Ultrakurzpuls-Faserlaserverstärkersystemen ist der Einsatz passiver Transportfasern wenn überhaupt nur eingeschränkt möglich, da die vorliegenden hohe Intensitäten im Faserkern, beispielsweise in passiven Transportfasern, zu nichtlinearen Effekten führen können. Diese Effekte können z.B. zu einer Selbstphasenmodulation führen, die eine Zerstörung der Pulsqualität bewirken kann. Bei einem CPA-Lasersystem (CPA: chirped puls amplification) können derartig phasenmodifizierte Pulse nicht mehr oder nur unvollständig komprimiert werden.

Alternativ offenbart US 9,014,220 B eine Freistrahleinkopplung. Diese erfordert allerdings eine Positionierung von optischen Komponenten zueinander, die höchste Genauigkeit und Stabilität voraussetzt. Insbesondere bei thermischer Belastung, z.B. bei vorliegenden Schwankungen der Außentemperatur während des Transports und vor allem aber durch die Abwärme, die beim Laserprozess selbst - beispielsweise durch Absorption, Quantendefekt und Photodarkening - entsteht, kann es zu Dehnungen bzw. Lageveränderungen innerhalb der Faserlaserkonfiguration kommen. Letzteres kann zu Verschlechterungen und Instabilitäten bei der Ein- bzw. Auskopplung führen, wobei die Einkopplung in der Regel kritischer für die Performance des Faserlaserverstärkersystems ist.

FR 2837290 A1 offenbart einen ultra-kompakten optischen Verstärker, der in einem Gehäuse eine Faser zur Verstärkung vorsieht. Das Gehäuse weist einen Boden und optional eine Wand zur hermetischen Abtrennung der Faser auf. WO 2001/91252 A2 und US 2003/0133686 A1 offenbaren einen kompakten Hochleistungsfaserlaser bzw. eine optische Vorrichtung mit spiralförmig gewundenen Verstärkungsfasern.

US 2004/0223721 A1 offenbart ein System zur Fertigung von optischen Systemen, wobei das System eine flexible Halterung für z. B. eine Faser verwendet.

MELLES GRIOT 1997-98: OPTICS, FIBER OPTICS; TABLES & HARDWARE, LASERS, INSTRUMENTS, LAB ACCESSORIES, 19970101 Melles Griot, USA, XP055342695 offenbart auf S. 294 eine Ausrichteinheit für eine Faser, die halbsteife Biegeelemente einsetzt.

Einem Aspekt dieser Offenbarung liegt die Aufgabe zugrunde, ein Faserlaserverstärkersystem und insbesondere eine Faserhalterungseinheit für ein Faserlaserverstärkersystem mit geringer bzw. reduzierter thermischer Anfälligkeit anzugeben.

Zumindest eine dieser Aufgaben wird gelöst durch eine Faserhalterungseinheit nach Anspruch 1 und durch eine Faserlaserverstärkereinheit nach Anspruch 8. Weiterbildungen sind in den Unteransprüchen angegeben.

In einem Aspekt der vorliegenden Offenbarung umfasst eine Faserhalterungseinheit zum Bereitstellen einer Lichtleitfaser für ein Faserlaserverstärkersystem einen Grundkörper, der einen Faserendbefestigungsabschnitt, einen Faserführungsabschnitt und einen Verbindungsabschnitt zwischen dem Faserendbefestigungsabschnitt und dem Faserführungsabschnitt aufweist. Der Faserendbefestigungsabschnitt ist zur Befestigung eines Faserendbereichs der Lichtleitfaser haltenden Aufnahmeelements ausgebildet, der Faserführungsabschnitt ist zur Führung eines Fasermittelbereichs der Lichtleitfaser ausgebildet und der Verbindungsabschnitt ist zwischen dem Faserendbefestigungsabschnitt und dem Faserführungsabschnitt als Festkörpergelenk ausgebildet.

In einem weiteren Aspekt umfasst ein Faseraufhahmeelement eine sich entlang einer Längsrichtung erstreckenden Bodeneinheit, die insbesondere zur Befestigung an einem Faserendbefestigungsabschnitt einer wie z.B. zuvor angegebenen Faserhalterungseinheit ausgebildet ist. Ferner umfasst das Faseraufnahmeelement eine zumindest teilweise die Bodeneinheit abdeckend auf der Bodeneinheit anbringbare Abdeckeinheit. Die Bodeneinheit und die Abdeckeinheit sind zur Aufnahme eines Endabschnitts einer Lichtleitfaser ausgebildet, so dass sich der Endabschnitt in Längsrichtung erstreckt und ein Faserende der Lichtleitfaser an einer Kopplungsseite der Bodeneinheit in einer Freistrahlkopplungsposition positionierbar ist.

In Weiterbildungen kann die Auflage derart konfiguriert sein, dass Freistrahlkopplungsposition auch bei z.B. thermisch bedingten Volumenänderungen ortsfest bleibt.

In einem weiteren Aspekt umfasst eine Faserlasereinheit (z.B. eine Faserlaserverstärkereinheit oder ein Laseroszillator) eine optische Platte, eine wie z.B. oben angegebene Faserhalterungseinheit mit einem Faserführungsabschnitt und einem Faserendbefestigungsabschnitt, eine Lichtleitfaser, und einem ein Ende der Lichtleitfaser aufnehmendes Aufnahmeelement, wobei das Aufnahmeelement am Faserendbefestigungsabschnitt befestigt ist.

Im Folgenden werden einige Aspekte der hierin offenbarten Faserlasersysteme und Faserhalterungseinheiten zusammengefasst.

Die nachfolgenden beispielhaften Merkmale können in Verstärkereinheiten der verschiedenen Laserleistungsklassen vorliegen:
- Festkörpergelenke um die Bewegungsfreiheitsgrade für eine Kompensation thermischer Verformung(en) zu gewährleisten.
- nur an der Einkoppelseite oder nur an der Auskoppelseite oder an beiden Seiten eines Kassettengrundkörpers angebrachte Festkörpergelenke.
- eine beispielsweise rohrförmige Absorberhülse auf einer der Pumpeinkopplung gegenüberliegenden Seite zur Absorption von nicht in der Verstärkerfaser absorbierten Pumplichts. Bei UKP-Systemen werden möglichst kurze Fasern verwendet, um beispielsweise Nichtlinearitäten klein zu halten. Hierbei ist es vorteilhaft, das Pumplicht an der Signalausgangsseite einzukoppeln, um die effektive Absorptionslänge der aktiven Faser so kurz wie möglich zu halten. Dabei kann nicht absorbiertes Pumplicht beispielsweise an der gegenüberliegenden Seed-Einkopplungsseite austreten. Aufgrund der großen numerischen Apertur typischer aktiver Fasern weißt dieses Pumplicht eine starke Divergenz auf. Bei der Verwendung einer Absorberhülse, welche die hochdivergenten Komponenten des nicht absorbierten Pumplichts absorbiert, können die freien Aperturen im System begrenzt werden und mit kleinen optischen Elementen gearbeitet werden. Dies hat einen positiven Effekt auf die Stabilität der Einkopplung. Die niederdivergenten Komponenten des Pumplichts werden im Anschluss mit klassischen Absorberkomponenten absorbiert (z.B. dichroitischer Spiegel und Absorber). Zur Erleichterung der Wärmeabfuhr kann die Absorberhülse aus einem Material mit einer hohen Wärmeleitfähigkeit (z.B. Kupfer oder Aluminium) bestehen und kann ferner mit einer absorbierenden Schicht versehen sein und/oder eine Material-Strukturierung der inneren Fläche aufweisen.
- spannungsfreier Faserverlauf. Um mechanische Spannungen auf der Faser zu minimieren, können Faserführungsnuten in der Faserhalterungseinheit räumlich einen idealspannungsfreien Faserverlauf erlauben. Beispielsweise kann eine Spirale mit einer konstanten Steigung bereitgestellt werden, so dass die optische Faser im Kreuzungspunkt in unterschiedlichen Ebenen - also kontaktfrei - verläuft und somit keine wechselwirkende Spannungen ausübt.
- fächerartige in die Faserauflagefläche integrierte Nuten (Führungsstege) zur Kompensation von toleranz- und fertigungsbedingten unterschiedlichen Faserlängen.
- Nahe der Faserenden kann ein Coating der Faser entfernt oder ein Modestripper angebracht werden, beispielsweise um nicht im Pumpmantel geführtes Licht an der Faseroberfläche auskoppeln zu können.

Die nachfolgenden beispielhaften Merkmale können insbesondere in Verstärkereinheiten mit kleineren Leistungen (z.B. wenige bis einige 10 W mittlerer Leistung) vorliegen:
- eine Festkörpergelenkanbindung nur an der Einkoppelseite.
- wassergekühltes Trägerelement zur Halterung einer Absorberhülse (beispielsweise in Form einer Aluminiumhülse) und einer Einkoppellinse, wobei die Faser selbst durch Kontakt mit der Faseraufnahme und der Faserauflage beispielsweise luftgekühlt, d.h. nur indirekt über Kontaktwärmeableitung, wird.

Die nachfolgenden beispielhaften Merkmale können insbesondere in Verstärkereinheiten mit hohen Leistungen (ab z.B. ca. 50 W mittlere Leistung, beispielsweise mehrere 100 W mittlere Leistung) vorliegen:
- Festkörpergelenke an Ein-und Auskoppelseite.
- gekühltes Aufnahmeelement zur Halterung des Faserendes, wobei die Kühlung entweder über einen Kühlkörper mit Kühlkanälen oder über eine direkte (Um-)Spülung der Faser mit einem Kühlmittel (z.B. Wasser) erfolgen kann.
- Dreipunktauflage des Aufhahmeelements, wodurch gewährleistet werden kann, dass die Austrittsfacette bzw. die Faserenden auch unter thermischer Ausdehnung lokal stabil gehalten sind.
- Einbettung der (aktiven optischen) Faser in eine vorzugsweise (wasser-)gekühlte Einheit/Kassette (z.B. aus Aluminium) zur spannungsfreien ohne Zwangskräfte hervorrufenden Aufnahme. Für eine verbesserte thermische Anbindung kann die Faser mit einem vorzugsweise optisch transparenten und wärmeleitenden Material (z.B. Silikon) vergossen werden. Das Material hat vorzugsweise eine hohe Wärmeleitfähigkeit um den Wärmeabtransport zu vereinfachen.
- Vorsehen von Fasereintritt und Faseraustritt auf derselben Strahlhöhe durch Verkippen der Faserführungsfläche, z.B. der Nutgeometrie.

Hierin werden Konzepte insbesondere zur thermischen Entkopplung einer Faserhalterungseinheit (z.B. Faserhalterungs-/Faserkühlkassette) offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer beispielhaften Faserhalterungseinheit mit Faseraufnahmeelementen, Plattformen und Halterungen für ein Faserlaserverstärkersystem hoher Leistung,
- Fig. 2: eine schematische räumliche Darstellung der in Fig. 1 gezeigten Faserhalterungseinheit ohne Abdeckung und mit einer Plattform und optischen Einkopplungselementen,
- Fig. 3: eine Ansicht einer beispielhaften Unterseitenkonfiguration der in Fig. 1 gezeigten Faserhalterungseinheit,
- Fig. 4: eine schematische räumliche Darstellung der in Fig. 1 gezeigten Faserhalterungseinheit ohne Faseraufnahmeelementen und Plattformen,
- Fig. 5: eine Aufsicht der in Fig. 1 gezeigten Faserhalterungseinheit mit Faseraufnahmeelementen zur Verdeutlichung der Festkörpergelenke,
- Fig. 6: eine vergrößerte Ausschnitt eines Verbindungsabschnitts mit einem Festkörpergelenkt,
- Fig. 7: eine perspektivische Ansicht eines Festkörpergelenkbefestigungshalters,
- Fig. 8: eine schematische Seitenansicht der in Fig. 4 gezeigten Faserhalterungseinheit,
- Fig. 9: ein Schnitt durch ein beispielhaftes Faseraufhahmeelement mit optischen Einkopplungselementen für ein Faserlaserverstärkersystem hoher Leistung,
- Fig. 10: eine schematische räumliche Darstellung einer beispielhaften Absorberhülse,
- Fig. 11A und Fig. 11B: schematische räumliche Darstellungen eines beispielhaften Faseraufnahmeelements für ein Faserlaserverstärkersystem hoher Leistung,
- Fig. 12: eine Aufsicht auf einen Grundkörper eines beispielhaften Faseraufhahmeelements,
- Fig. 13: eine schematische räumliche Darstellung des in Fig. 12 gezeigten Grundkörpers zur Verdeutlichung der Orientierung von Ausgleichsachsen,
- Fig. 14: eine Aufsicht auf einer beispielhaften Faserhalterungseinheit mit Faseraufnahmeelementen und Halterungen für ein Faserlaserverstärkersystem niedriger oder mittlerer Leistung,
- Fig. 15: eine Bewegungsbeschränkungsvorrichtung zur Beschränkung eines Freiheitsgrads eines Festkörpergelenks,
- Fig. 16: eine Verbindungskonfiguration zweier Segmente der in Fig. 14 gezeigten Faserhalterungseinheit und
- Fig. 17: ein Faseraufhahmeelement für ein Faserlaserverstärkersystem niedriger oder mittlerer Leistung.

Hierin beschriebene Aspekte basieren zum Teil auf der Erkenntnis, dass über insbesondere in der Faserhalterungseinheit vorgesehene Festköpergelenke eine mechanische Entkopplung der auf der Faserkassette montierten Ein- bzw. Auskoppeleinheit von thermischen Verformungen der Faserhalterungseinheit möglich werden kann. Insbesondere kann mit derartigen Festkörpergelenk-basierten Ausführungsformen eine räumliche Stabilität der Einkopplung hinsichtlich einer thermischen Ausdehnung im Betrieb des Faserlaserverstärkersystems wie auch während des Transports bewirkt werden.

Ferner wurde erkannt, dass durch das hierin offenbarte Befestigungskonzept die Position eines Faserendes in Bezug zu den Positionen der optischen Komponenten unter thermischer Ausdehnung stabil gehalten werden kann. Dabei kann die Stabilität ferner durch eine spezielle Lagerung eines Faseraufnahmeelements - insbesondere bei höheren Leistungen und damit bei möglichen größeren thermischen Verformungen - erhöht werden.

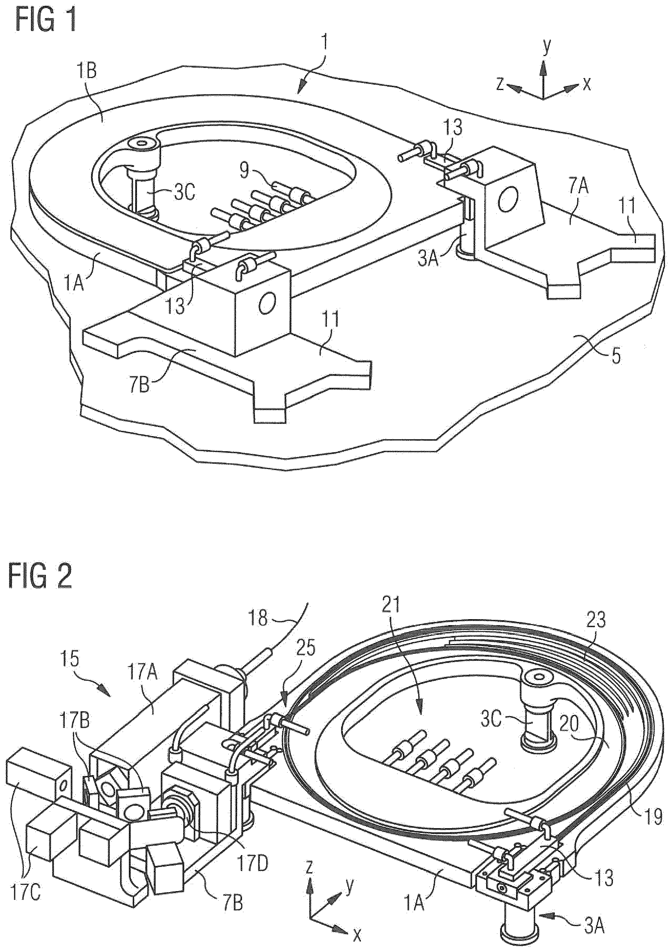

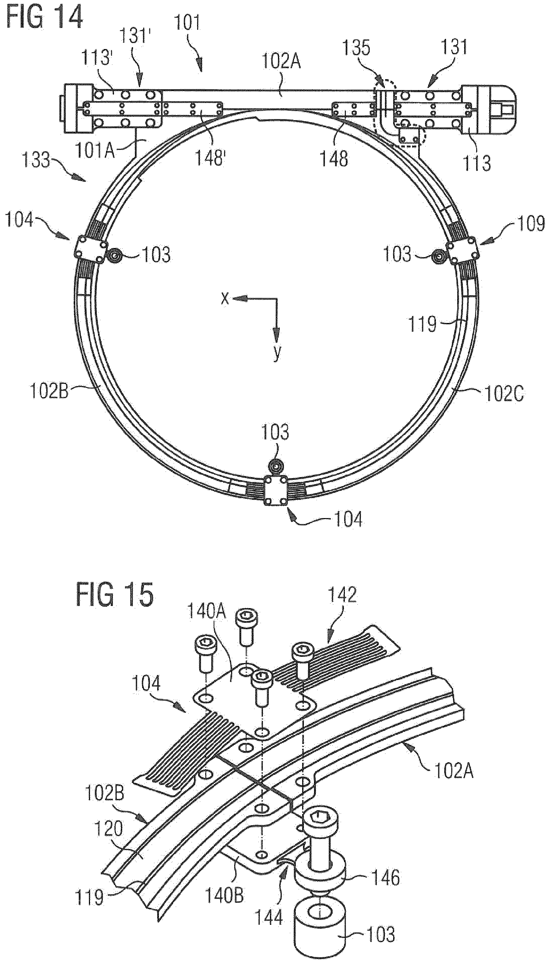

Im Folgenden wird in Zusammenhang mit den Figuren 1 bis 14 eine beispielhafte Ausführungsform beschriebene, die insbesondere in Faserlaserverstärkersysteme mit hoher Leistung eingesetzt werden können. Höhere Leistungen liegen in diesem Zusammenhang in der Größenordnung von einigen 10 W bis zu mehreren 100 W (mittlere Leistung). Die getroffenen Maßnahmen können, z.B. in ihrem Umfang reduziert oder selektiert, analog in Faserlaserverstärkersysteme mit geringen und mittleren Leistungen angewandt werden. Geringe und mittlere Leistungen liegen in diesem Zusammenhang in der Größenordnung von wenigen Watt bis z.B. zu 50 W (mittlere Leistung). Eine derartige beispielhafte Ausführungsform von Faserlaserverstärkersystemen mit geringen und mittleren Leistungen wird in Zusammenhang mit den Figuren 14 bis 17 erläutert.

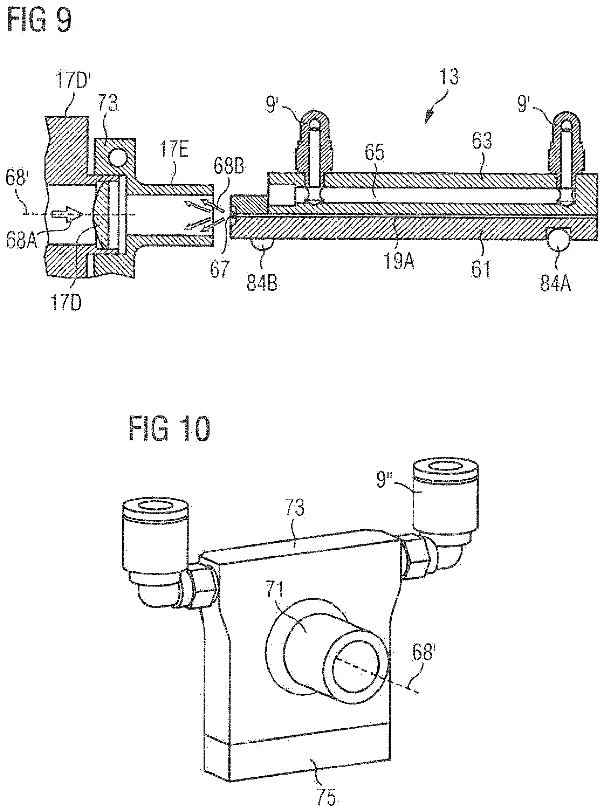

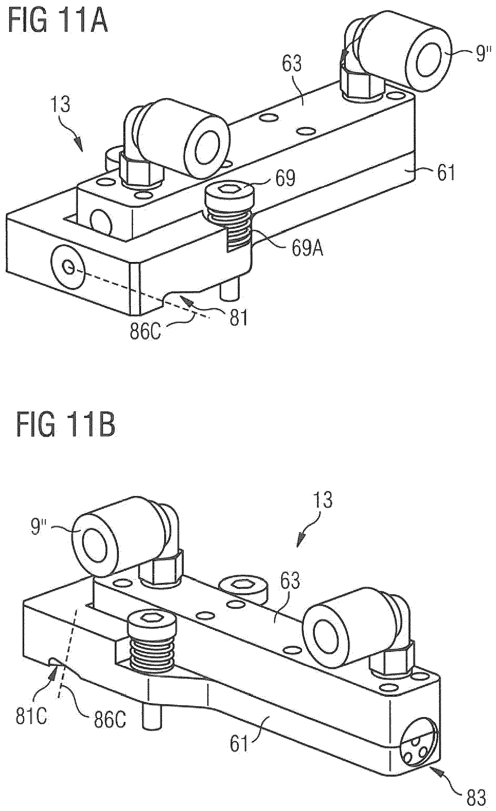

Hinsichtlich der ersten Ausführungsform wird unter Bezugnahme auf die Figuren 1 bis 8 das Konzept von Festkörpergelenken bei Faserhalterungseinheiten erläutert. Die Figuren 9 und 10 betreffen die Absorption von austretendem nicht verwertetem Pumplicht und die Figuren 11A bis 13 ein Faseraufhahmeelement für eine Lagekompensation bei thermischer Ausdehnung.

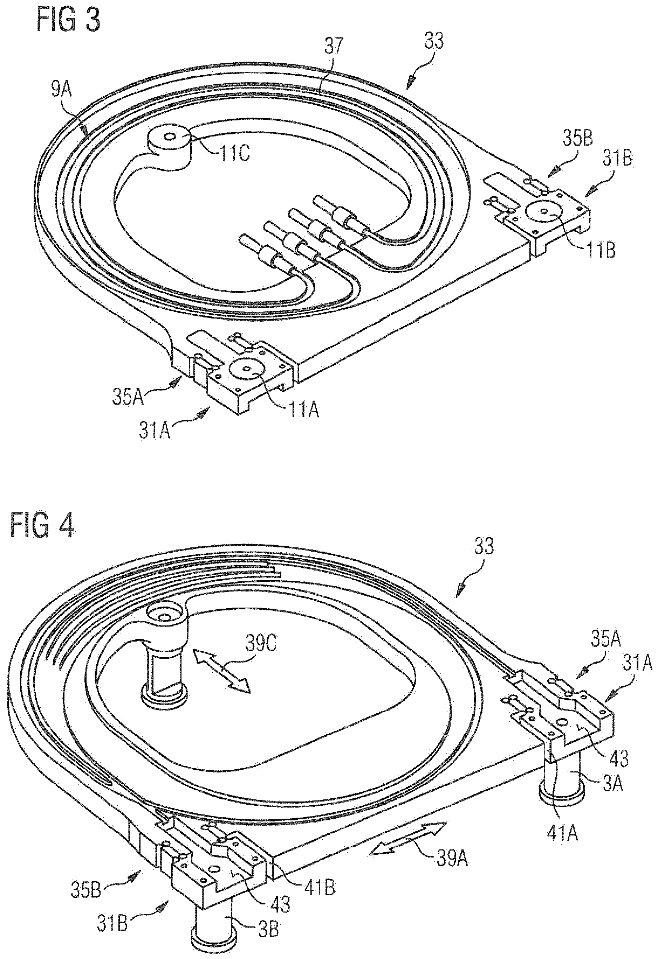

Fig. 1 zeigt schematisch eine räumliche Darstellung einer beispielhaften Ausführungsform einer Faserhalterungseinheit 1 für ein Faserlaserverstärkersystem. Die Faserhalterungseinheit 1 weist eine Grundkörper 1A und eine Abdeckung 1B auf. Die Faserhalterungseinheit 1 ist beispielsweise mit zwei starren konventionellen Befestigungshalterungen 3A, 3B (die Befestigungshalterung 3B ist z.B. explizit in Fig. 4 gezeigt) und einer Festkörpergelenkbefestigungshalterung 3C auf einer optischen Platte 5 (z.B. ein Laserträger) montiert.

Ferner sind in Fig. 1 beispielhaft zwei Plattformen 7A, 7B zur ortsfesten Lagerung von optischen Elementen und mehrere Kühlanschlüsse 9 zum Versorgen eines im Detail in Fig. 3 gezeigten Kühlkreislaufs 9A mit einem Kühlfluid (z.B. Wasser) gezeigt. Die Plattformen 7A, 7B sind jeweils fest mit den entsprechenden Befestigungshalterungen 3A, 3B verbunden (z.B. verschraubt) und weisen insbesondere Befestigungsflächen 11 zur Befestigung der optischen Elemente auf. Eine beispielhafte Anordnung eines derartigen Optikplattformsystems wird schematisch in Fig. 2 gezeigt.

Ferner sind in Fig. 1 beispielhaft zwei Faseraufnahmeelemente 13 gezeigt. Die Faseraufhahmeelemente 13 nehmen jeweils eines der gegenüberliegenden Faserenden einer Lichtleitfaser (hierin auch kurz Faser) auf, die sich unter der Abdeckung 1B der Faserhalterungseinheit erstreckt, auf und sind dazu ausgebildet, die Faser beispielsweise auf der in Verbindung mit den Figuren 11A bis 13 erläuterten Weise bezüglich den entsprechenden Befestigungshalterungen 3A, 3B räumlich zu fixieren.

Die Faserhalterungseinheit 1 ist in ihren Ausmaßen an die vorliegende Faserlänge angepasst, wobei die Faser üblicherweise im Wesentlichen kreisförmig entlang einer durch die Faserhalterungseinheit 1 gebildeten Ringstruktur verläuft. Beispielsweise erstreckt sich die Faserhalterungseinheit 1 in den X- und Y-Richtungen der in Fig. 1 angedeuteten Raumachsen jeweils über einige 10 cm, beispielsweise 30 cm für Faserlängen im Bereich von 180 cm.

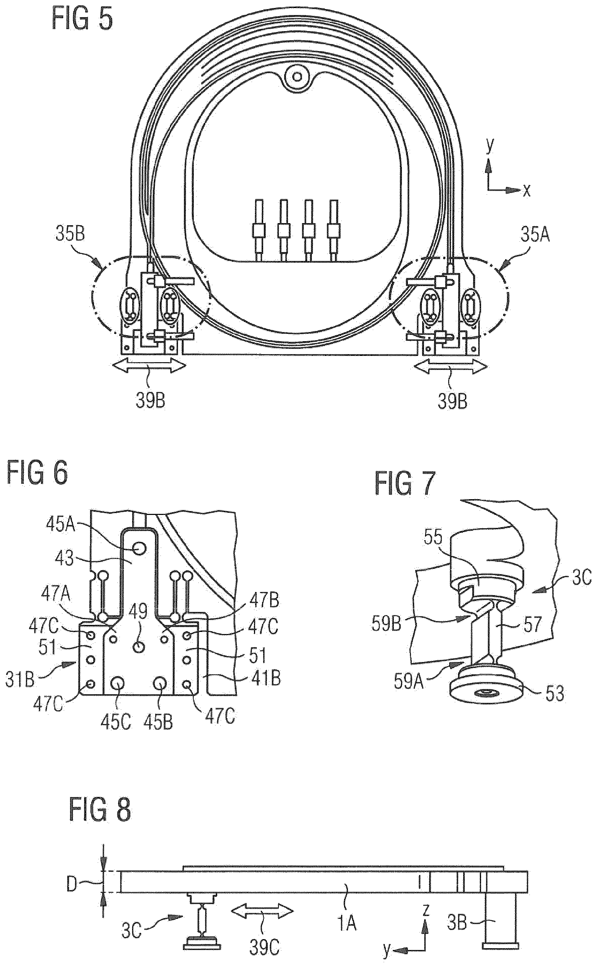

Der im Wesentlichen massiv ausgebildeten Grundkörper 1A weist beispielsweise eine in Fig. 8 kenntlich gemachte Dicke D auf, beispielsweise von 5 mm oder mehr, z.B. von 15 mm für eine aus Aluminium hergestellte Faserhalterungseinheit zur Aufnahme der zuvor angesprochenen 180 cm langen Faser. Entsprechend ist der Grundkörper 1A relativ steif in Z-Richtung, erlaubt aber eine z.B. durch Temperaturänderungen ausgelöste Verformung. Durch die im Folgenden erläuterten Maßnahmen soll der Einfluss der Verformung auf eine zugrunde liegende Verstärkerperformance geringgehalten werden. Insbesondere erlauben die hierin dargestellten Ausführungsformen eine Entkopplung einer thermisch bedingten Verformung des Grundkörpers 1A von den Plattformen 7A, 7B sowie von den Faseraufnahmeelementen 13.

Fig. 2 zeigt ein beispielhaftes Optikplattformsystem 15, bei dem verschiedene optische Elemente an den entsprechenden Befestigungsflächen 11 montiert sind. Beispiele für optische Elemente umfassen eine optische Teleskopeinheit 17A, Umlenkspiegel 17B, Strahlüberwachungseinheiten 17C und eine Fokussiereinkoppellinse 17D. Ferner zeigt Fig. 2 den Grundkörper 1A ohne Abdeckung 1B zur Verdeutlichung des Faserverlaufs in der Faserhalterungseinheit 1. Zur Verdeutlichung der Lage der Aufnahmeeinheit 13 bezüglich der Befestigungshalterung 3A wird die Plattform 7A in Fig. 2 nicht gezeigt.

Das Optikplattformsystem 15 ist ein Beispiel für eine Freistrahl-Seed-Einkopplung, bei der Seed-Laserlicht mit einer Lichtleitfaser 18 beispielsweise der optischen Teleskopeinheit 17A zugeführt, in seiner Lage überwacht und auf ein Faserende einer in der Faserhalterungseinheit 1 liegenden (Verstärker-)Lichtleitfaser 19 fokussiert wird. Beispielsweise erlaubt das Optikplattformsystem 15 eine Single-Mode-Kopplung. Ergänzend sei angemerkt, dass eine entsprechende Anordnung von insbesondere positionssensitiven optischen Komponenten beispielsweise auch für eine Pump-Seite, beispielsweise auf der Plattform 7A in Fig. 1, vorgesehen werden kann.

Die Lichtleitfaser 19 ist z.B. eine auf Wellenlängen von ca. 1 bis 3µm ausgelegte Faser mit Ytterbium-, Holmium-, Thulium- und/oder Erbium-Dotierung. Allgemein sind die Lichtleitfasern z.B. auf die Verstärkung von Lichtpulsen mit fs-Pulsdauern bis zu ns-Pulsdauern ausgelegt. Beispielsweise Ausführungsformen umfassen Step-Index-Fasern, Photonische Kristall-Faser -. Faserkerndurchmesser liegen beispielsweise in der Größenordnung von einigen wenigen Mikrometern bis zu einigen 100 Mikrometer (z.B. 1 µm bis z.B. 200 µm). Absorptionslängen können z.B. im Zentimeter- bis einige Meterbereich liegen. Sich ergebenden Faserlängen sind im Bereich von einigen wenigen Zentimetern bis zu einigen Metern. Je kürze die Faser, desto geringer ist der mögliche nichtlineare Einfluss, aber umso stärker muss die Faser gepumpt werden und desto größer sind die thermischen Belastungen, denen z.B. mit der thermischen Entkopplung entgegengewirkt wird.
Wie in Fig. 2 gezeigt verläuft die Lichtleitfaser 19 in einer auf der Oberseite des Grundkörpers 1A vorgesehenen Aussparung 20 eineinhalb Mal um eine innerer Öffnung 21 der ringartige ausgeführten Faserhalterungseinheit 1 herum. Die beiden Enden der Lichtleitfaser 19 werden von den Aufnahmeelementen 13 gehalten, so dass sich im Bereich der Aufhahmeelemente 13 die Faser 19 in Y-Richtung (Längsrichtung des Aufnahmeelements) erstreckt. Zwischen den Aufnahmeelementen 13 verläuft die Lichtleitfaser 19 auf einer Faserauflagefläche der im Grundkörpers 1A vorgesehenen Aussparung 20. Zur Anpassung des Faserverlaufs weist die Aussparung 20 eine Lamellenstruktur 23 auf, die eine Anpassung der bereitgestellten Länge des Faserverlaufs unter Beibehaltung einer Führungswirkung der Faser 19 ermöglicht. In Fig. 1 verläuft die Aussparung 20 beispielhaft ähnlich einer gekippten Spirale entlang ca. 540°, so dass die beiden Faserenden im Wesentlichen auf gleicher Höhe liegen, sich aber kein Kontakt der Faser 19 an einem Kreuzungsunkt 25 ergibt. Der Boden der Aussparung 20 ist als Faserauflagefläche insbesondere für eine möglichst gute thermische Kopplung zwischen Faser 19 und Grundkörper 1A ausgebildet.

Die Wärmeabfuhr erfolgt z.B. über einen oder mehrere Kühlkreisläufe 9A, wie sie beispielhaft in Fig. 3 dargestellt sind. Die Kühlkreisläufe 9A basieren beispielsweise auf in den Grundkörper integrierte Kupferrohre 37, die insbesondere dem Verlauf der Lichtleitfaser 19 folgend angeordnet sind und in die Kühlanschlüsse 9 münden. Entsprechend kann Wärme aus dem Kassettenbereich, der während des Betriebs am meisten von der Lichtleitfaser 19 erwärmt wird, abgeführt werden. Ferner kann zur Verbesserung der Wärmeleitung von der Lichtleitfaser 19 auf den Grundkörper 1A ein wärmeleitendes bevorzugt nachgebendes Material wie Silikon in die Aussparung 20 eingebracht werden.

In den Figuren 3 bis 6 ist die Struktur des Grundkörpers 1A hinsichtlich des Festkörpergelenkkonzepts verdeutlicht. So weist der Grundkörper 1A in der beispielhaften Ausführungsform zwei Faserendbefestigungsabschnitte 31A, 31B, einen Faserführungsabschnitt 33 und jeweils einen Verbindungsabschnitt 35A bzw. 35B zwischen dem Faserendbefestigungsabschnitten 31A, 31B und dem Faserführungsabschnitt 33 auf.

Die zuvor erläuterte Befestigung an der optischen Platte 5 erfolgt an den Faserendbefestigungsabschnitten 31A, 31B. Entsprechend sind die Faserendbefestigungsabschnitte 31A, 31B zur Befestigung der Befestigungshalterungen 3A, 3B an ihrer Unterseite mit Befestigungsflächen 11A, 11B ausgebildet. Ferner sind die Faserendbefestigungsabschnitte 31A, 31B zur Befestigung der Faseraufnahmeelemente 13, die jeweils einen Faserendbereich der Lichtleitfaser 19 halten, sowie zur Befestigung der Optikplattformsysteme 15 ausgebildet.

Der Faserführungsabschnitt 33 umfasst die zuvor beispielhaft erläuterten Merkmale wie die Aussparung 20 und die Lamellenstruktur 23 zur Führung eines Fasermittelbereichs der Lichtleitfaser 19.

Jede der Verbindungsabschnitte 35A, 35B ist in der Ausführungsform des Faserlaserverstärkungssystems mit hoher Leistung als Festkörpergelenk ausgebildet. Allgemein kann die Ausbildung eines Festkörpergelenks durch entsprechende Materialformgebung erfolgen. Aufgabe des Festkörpergelenks ist es eine elastische Verformung ohne plastische Verformung zu erlauben. In der beispielhaften Ausführungsform wird das Festkörpergelenk im Verbindungsabschnitt 35A, 35B beispielsweise durch eine räumliche z.B. durch Einschnitte 41A, 41B bewirkte Trennung des Faserführungsabschnitt 33 von den Faserendbefestigungsabschnitten 31A, 31B und/oder durch Materialreduzierung ausgebildet. So wurde seitlich, d.h. entlang der X-Achse, Material weggenommen. Beispielhafte Entlastungsbohrungen (siehe Fig. 6) können zum Beispiel zusammen mit eine Absenkung einer Bodenfläche 43, die sich teilweise in den zugehörigen Verbindungsabschnitt erstrecken kann, eine Materialschwächung zur Ausbildung des Festkörpergelenks bewirken. Derartige Materialmodifikationen beeinflussen allgemein die Freiheitsgrade des Festkörpergelenks.

Im Ergebnis stellt das Festkörpergelenk einen Bewegungsfreiheitsgrad des Faserführungsabschnitts 33 bezüglich der Faserendbefestigungsabschnitte 31A, 31B in der X-Y-Ebene bereit. In Fig. 4 ist dies durch einen Pfeil 39A und in Fig. 5 durch die Pfeile 39B angedeutet. Bei einer entsprechenden Wahl der Dicke D des Grundkörpers 1A kann das Festkörpergelenk in Z-Richtung keinen Freiheitsgrad aufweisen, so dass thermische Verformungen im Wesentlichen durch Relativbewegungen in der X-Y-Ebene bei den Festkörpergelenken der Verbindungsabschnitte 35A, 35B aufgefangen werden.

In Fig. 5 sind die Bereiche der Verbindungsabschnitte 35A, 35B (gestrichelte Ovale) und die Zonen seitlicher Materialschwächung (durchgezogene Ovale) schematisch dargestellt.

Fig. 6 zeigt eine vergrößerte Darstellung des Faserendbefestigungsabschnitts 31B im Bereich des entsprechenden Verbindungsabschnitts 35B. Die Bodenfläche 43 erstreckt sich von dem Faserendbefestigungsabschnitt 31B über den Verbindungsabschnitt 35B in einen Randbereich des Faserführungsabschnitts 33. Man erkennt in der Aufsicht, dass die Bodenfläche 43 auf der Faserführungsabschnittseite in X-Richtung schmaler ausgeführt ist, als auf der Einkopplungsseite. In der beispielhaften Ausführungsform weist jede der Bodenflächen 43 drei Vertiefungen 45A, 45B, 45C als Auflageflächen für Positionierkugeln (siehe auch Fig. 9) auf. Die Positionierkugeln werden für eine ausdehnungskompensierte Lagerung und/oder thermische Trennung des Aufnahmeelements 13 verwendet.

Ferner ist der Faserendbefestigungsabschnitt 31B zum Befestigen des Aufnahmeelements 13 ausgebildet (beispielsweise unter Verwendung zweier Gewinde 47A, 47B) sowie zur Befestigung an der Befestigungshalterung 3B beispielsweise unter Verwendung eines mittig in der Bodenfläche 43 angeordneten Durchgangslochs 49 ausgebildet. Ferner wird die Bodenfläche 43 lateral von Seitenwänden 51 begrenzt. Die Seitenwände 51 werden zur Montage der Plattformen 7A, 7B z.B. mit Stifteinsätzen und Gewinden 47C verwendet.

Um ferner Verspannungen aufgrund von z.B. thermischen Ausdehneffekten zu reduzieren, kann ein weiterer Bewegungsfreiheitsgrad der Befestigung des Grundkörpers 1A in Y-Richtung vorgesehen werden.

In den Figuren 4 und 8 ist durch einen Pfeil 39C eine derartige weitere mögliche Bewegungsrichtung zur Kompensation von thermischen Veränderungen der Faserhalterungseinheit 1 angedeutet. Um eine Lageänderung in Y-Richtung aufnehmen zu können, ohne dabei eine weitere Kraft auf die Faserhalterungseinheit 1 auszuüben, kann beispielsweise eine Festkörpergelenkbefestigungshalterung 3C eingesetzt werden.

Die Festkörpergelenkbefestigungshalterung 3C ist in Fig. 7 vergrößert dargestellt und Fig. 8 verdeutlicht den durch die Festkörpergelenkbefestigungshalterung 3C bereitgestellten Freiheitsgrad (Pfeil 39C) in einer Seitenansicht der in Fig. 4 gezeigten Konfiguration.

Beispielsweise kann die Festkörpergelenkbefestigungshalterung 3C an einer am Faserführungsabschnitt 33 vorgesehenen Befestigungsfläche 11C (siehe Fig. 3) montiert werden. Die Festkörpergelenkbefestigungshalterung 3C umfasst eine Basis 53 zum Befestigen beispielsweise an der optischen Platte 5. Ferner weist sie ein Oberteil 55 zum Befestigen an der Faserhalterungseinheit 1 (allgemein an einem optischen Bauteil) sowie allgemein mindestens ein Festkörpergelenk auf. In der in Fig. 7 dargestellten Ausführungsform weist die Festkörpergelenkbefestigungshalterung 3C ferner ein plattenförmig ausgebildetes Mittelteil 57 auf, welches jeweils über ein Festkörpergelenk 59A, 59B mit einerseits der Basis 53 und andererseits dem Oberteil 55 verbunden ist.

Die Plattenform des Mittelteils 57 bedingt ein sich linear erstreckendes Festkörpergelenk, so dass für die Festkörpergelenkbefestigungshalterung 3C eine Steifigkeit in Y-Richtung nicht gegeben ist. Entsprechend führt eine Ausdehnung in Y-Richtung des Grundkörpers 1A zu einem leichten Kippen des Mittelteils 57 in Y-Richtung (begleitet von einer minimalen Höhenänderung).

Hinsichtlich der Befestigung der Faseraufnahmelemente 13 stellen die Bodenflächen 43 der Faserendbefestigungsabschnitte 31A, 31B aufgrund der festen Montage an den Halterungen 3A, 3B räumliche Fixpunkte dar. Auf diesen Fixpunkten sind die Faseraufnahmelemente 13 angeordnet.

Fig. 9 zeigt einen vereinfachten Schnitt durch das Faseraufnahmeelement 13 sowie eines Teils des in Fig. 2 gezeigten Optikplattformsystems 15, insbesondere die in einer Linsenhalterung 17D' montierte Fokussiereinkoppellinse 17D zusammen mit einer Strahlhülse 17E.

Das Faseraufnahmeelement 13 weist eine sich entlang einer Längsrichtung (z.B. in Fig. 1 die Y-Richtung) erstreckende Bodeneinheit 61 und eine zumindest teilweise die Bodeneinheit 61 abdeckende auf der Bodeneinheit 61 angebrachte Abdeckeinheit 63 auf. In der Abdeckeinheit 63 ist beispielsweise ein Kühlkanal 65 ausgebildet, der über Kühlanschlüsse 9' eine aktive Kühlung des Faseraufnahmeelements 13 ermöglicht. Zwischen Bodeneinheit 61 und Abdeckeinheit 63 erstreckt sich ein Faserendabschnitt 19A der Lichtleitfaser 19, der einkopplungsseitig ein Faserende 67 aufweist.

Die Linse 17D ist ein Teil einer Freistrahleinkopplung, die einen einzukoppelnden Laserstrahl ortsfest bezüglich des Faserendbefestigungsabschnitts 31A, 31B auf eine definierte Faserendposition (im Falle eines ortsfesten Faserendes 67 das Faserende 67 selbst), fokussiert. Die Linse 17D erlaubt es dadurch, einfallendes Seed-Laserlicht 68A in die Lichtleitfaser 19 einzukoppeln. Ein analoger bzw. aufgrund der leichteren Einkopplung des Pumplichts vereinfachter Aufbau kann pumpseitig verwendet werden.

Da für hohe Verstärkungen üblicherweise nicht alles Pumplicht umgesetzt wird, tritt aus dem Faserende 67 allerdings Pumplicht 68B in einer dem Seed-Laserlicht 68A entgegengesetzter Richtung aus. Das austretende Pumplicht 68B propagiert im Wesentlichen innerhalb der Strahlhülse 17E und kann aufgrund seiner großen Divergenz auf der Innenseite der Strahlhülse 17E absorbiert werden.

In Fig. 10 ist eine beispielhafte Ausführungsform der Strahlhülse 17E vergrößert dargestellt. Man erkennt einen zylinderförmigen Abschnitt 71, der beispielsweise von einem Trägerelement 73 gehalten wird und dessen Zylinderachse im Wesentlichen überlappend mit einer optischen Achse 68' des Seed-Laserlichts 68A angeordnet ist. An den zylinderförmigen Abschnitt 71 kann sich in Richtung der Zylinderachse ein Trichterabschnitt anschließen (nicht gezeigt).

Die austretende Pumpstrahlung 68B wird auf der beispielsweise mit einer absorbierenden Schicht versehenen Innenseite des zylinderförmigen Abschnitts 71 absorbiert, wodurch sich die Strahlhülse 17E stark erwärmt. Zur Wärmeabfuhr weist das Trägerelement 73 im gezeigten Ausführungsbeispiel einen Kühlkanal auf, der durch Kühlanschlüsse 9" mit einem Kühlkreislauf verbunden werden kann.

Ferner weist das in Fig. 10 gezeigte Ausführungsbeispiel ein isolierendes Element 75 auf, das z.B. in Kontakt mit der entsprechenden Plattform 7A, 7B stehen kann, aber aufgrund der geringen thermischen Leitfähigkeit eine thermische Entkopplung des erwärmten zylinderförmigen Abschnitts 71 von der Plattform 7A, 7B bewirkt. Ferner kann das Trägerelement 73 beispielsweise von der Linsenhalterung 17D' und der Linse 17D thermisch isoliert (beispielsweise auf Abstand angeordnet) sein.

Im Zusammenhang mit den Figuren 11A, 11B, 12, und 13 wird im Folgenden ein beispielhaftes Faseraufnahmeelement 13 mit einer speziell konfigurierten Unterseite zur Wechselwirkung mit der Bodenfläche 43 der Faserendbefestigungsabschnitte 31A, 31B über Kugeln erläutert. Denn zwar bleibt die durch die Linse 17D erzeugte Fokusposition bezüglich des entsprechenden Faserendbefestigungsabschnitts 31A, 31B bzw. der Befestigungshalterung 3A, 3B und der Tischplatte 5 ortsfest, jedoch kann sich das Faseraufnahmeelement 13 bei unterschiedlichen thermischen Bedingungen ausdehnen oder zusammenziehen, so dass nicht zwangsweise gewährleistet ist, dass das Faserende 67 ebenfalls ortsfest ist.

Die Figuren 11A und 11B zeigen perspektivische Ansichten des Faseraufnahmeelements 13 mit den Kühlanschlüssen 9", die von der Abdeckeinheit 63 ausgehen. Die Abdeckeinheit 63 ist beispielsweise mit der Bodeneinheit 61 fest verschraubt. Ferner erkennt man zwei Befestigungsschrauben 69, die mit Druckfedern 69A zum Andrücken der Faseraufhahmeeinheit 13 auf die Bodenfläche 43 vorgesehen sind. Die Lage der Befestigungsschraube 69 wird später näher erläutert.

In Fig. 11A erkennt man eine Ausnehmung 81 an der Unterseite der Bodeneinheit 61 sowie Öffnungen 83 auf der Faseraustrittsseite des Aufnahmeelements 13. Die Aussparung 81 und die Öffnungen 83 stehen im Zusammenhang mit einer eine thermische Positionskompensation bewirkende Auflage des Faseraufhahmeelements 13 auf der Bodenfläche 43 über Kugeln.

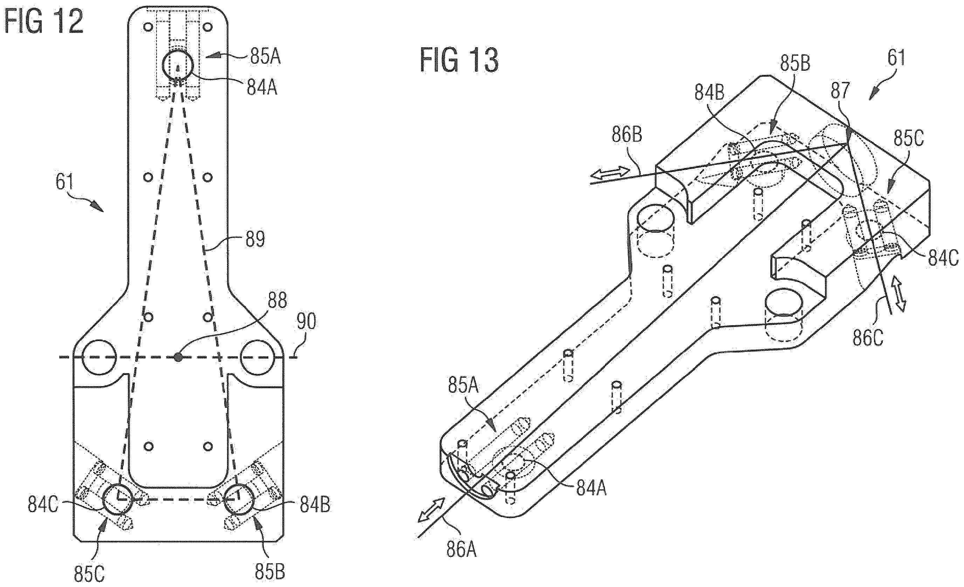

Im Speziellen sind - wie in den Figuren 12 und 13 gezeigt - drei Paare von Zylinderstiften vorgesehen, um eine Dreipunktauflage auf drei Kugeln 84A, 84B, 84C, die sich in den Vertiefungen 45A, 45B, 45C der Bodenfläche 43 befinden, zu ermöglichen.

Ein erstes Paar 85A von Zylinderstiften bildet ein erstes Führungsschienensystem, das zum Führen einer thermischen Ausdehnbewegung des Faseraufnahmeelements 13 entlang einer ersten Achse 86A ausgebildet ist. Die Achse 86A ist im Wesentlichen entlang der Richtung des Faserendabschnitts 19A und im montierten Zustand des Aufhahmeelements 13 insbesondere auf eine gewünschte Freistrahlkopplungsposition 87 ausgerichtet, eventuell mit einer leichten Verkippung zur X-Y-Ebene in Fig. 1.

Ein zweites Paar 85B von Zylinderstiften bildet ein zweites Führungsschienensystem, das zum Führen einer thermischen Ausdehnungsbewegung entlang einer zweiten Achse 86B ausgebildet ist. Die zweite Achse 86B erstreckt sich im Wesentlichen unter einem Winkel kleiner 90° bezüglich der ersten Achse 86A und ist im eingebauten Zustand des Aufhahmeelements 13 insbesondere auf die Freistrahlkopplungsposition 87 ausgerichtet.

Wie in Fig. 13 gezeigt, verläuft die zweite Achse 86B von hinten (d.h. von der Faseraustrittsseite) und von unten durch die gewünschte Freistrahlkopplungsposition 87. Die geneigte Orientierung des Paares 85B von an sich gleich langen Zylinderstiften führt in Fig. 12 zu einer reduzierten Länge in der gezeigten Zeichenebene (siehe Vergleich mit Paar 85A).

Ein drittes Paar 85C von Zylinderstiften bildet ein drittes Führungsschienensystem, das zum Führen einer thermischen Ausdehnungsbewegung entlang einer dritten Achse 86C ausgebildet ist. Ähnlich der zweiten Achse 86B erstreckt sich die dritte Achse 86C im Wesentlichen unter einem Winkel kleiner 90° bezüglich der ersten Achse 86A und ist insbesondere auf die Freistrahlkopplungsposition 87 ausgerichtet. Beispielsweise kann die Ausrichtung der zweiten und dritten Achse spiegelsymmetrisch zu einer durch die Freistrahlkopplungsposition 87 verlaufende Y-Z-Symmetrieebene sein.

Somit treffen sich beispielsweise die Achsen 86A, 86B, 86C im Wesentlichen in der gewünschten Freistrahlkopplungsposition 87 und bilden die Kanten einer Pyramide, wobei die Freistrahlkopplungsposition 87 die Spitze der Pyramide ist.

Diese Orientierung zueinander bewirkt, dass die Lage der Freistrahleinkopplungsposition 87 im Wesentlichen ortsfest bleibt, wenn sich bei eine insbesondere thermisch bedingten Volumenänderung des Faseraufhahmeelements 13 die Positionen der Auflage der Unterseite auf den Kugeln ändert. Die Kugeln stellen Fixpunkte dar, entlang denen sich die Unterseite des sich ausdehnenden/schrumpfenden Aufnahmeelements verschieben. Aufgrund der abgewinkelten Anordnung, insbesondere der Verkippung der Achsen 86B und 86C bezüglich der X-Y-Ebene, und bei Vorliegen der Auflage des Faseraufnahmeelements 13 an einem ersten der ersten Führungsschiene zugeordneten Fixpunkt (Kugel 84A in der entsprechenden Vertiefung 45), an einem zweiten der zweiten Führungsschiene zugeordneten Fixpunkt (Kugel 84B in einer entsprechenden Vertiefung 45) und an einem dritten der dritten Führungsschiene zugeordneten Fixpunkt (Kugel 84C an einer entsprechenden Vertiefung 45) erfolgt ein Absenken des Faseraufnahmeelements 13 bei einer Ausdehnung desselben und ein Anheben des Faseraufhahmelements bei einer Volumenreduzierung des Faseraufhahmeelements 13. Das Absenken und Anheben erfolgt insbesondere einkopplungsseitig aufgrund insbesondere der Ausdehnung in lateraler Richtung.

In anderen Worten bewirkt die beschriebene Führungsschienensystemkonfiguration insbesondere hinsichtlich des zweiten Fixpunkts und des dritten Fixpunkts einen Höhenausgleich zur Kompensation der Änderung der Größe des Faseraufhahmeelements 13.

Die oben erläuterte Kompensationsbewegung erfordert eine gewisse Beweglichkeit des Faseraufnahmeelements 13. Diese Beweglichkeit kann beispielsweise mit der Befestigung des Faseraufhahmeelements mit den Schrauben 69 und den Druckfedern 69A gewährleistet werden.

Beispielsweise kann die Befestigung im Bereich eines Flächenschwerpunkts 88 eines durch die drei Fixpunkte aufgespannten Dreiecks 89 erfolgen. In der in Fig. 12 gezeigten Ansicht sind die Positionen der Schrauben 69 seitlich vom Flächenschwerpunkt entlang der X-Achse angeordnet, so dass insbesondere ein Kippen um eine Querachse 90, die durch die beiden Schrauben 69 und den Flächenschwerpunkt 88 läuft, möglich ist.

Ergänzend sei erwähnt, dass durch entsprechendes Anordnen des Faserendabschnitts 19A das Faserende 67 in der Freistrahlkopplungsposition 87 positioniert werden kann. Überdies kann durch entsprechende Justage des z.B. einfallenden Seed-Laserstrahls 68A die Freistrahlkupplungsposition 87 auch laserseitig eingestellt werden.

Ergänzend zu der vorausgehend beschriebenen Ausführungsform einer Faserhalterungseinheit 1 für Faserlaserverstärkersysteme mit hohen Leistungen wird im Folgenden mit Bezug zu den Figuren 14 bis 17 eine Faserhalterungseinheit 101 für Faserlaserverstärkungssysteme mit niedrigen bis mittleren Leistungen erläutert.

Die in Fig. 14 gezeigte Faserhalterungseinheit 101 weist wiederum einen Grundkörper 101A mit einem Faserendbefestigungsabschnitt 131, einem Faserführungsabschnitt 133 und einem als Festkörpergelenk ausgebildeten Verbindungsabschnitt 135 zwischen dem Faserendbefestigungsabschnitt 131 und dem Faserführungsabschnitt 133 auf. Der Faserendbefestigungsabschnitt 131 ist die Seed-Seite, d.h. ein Seed-Laserstrahl wird dem an dem Faserendbefestigungsabschnitt 131 befestigten Faseraufnahmeelement 113, insbesondere einem von dem Faseraufhahmeelement 113 gehaltenen Seed-Ende einer Verstärkerfaser 119, zugeführt.

Zusätzlich weist der Grundkörper 101A einen stationären, d.h. nicht über ein Festkörpergelenk verbundenen, Faserendbefestigungsabschnitt 131' auf. An dem Faserendbefestigungsabschnitt 131' ist ein Faseraufhahmeelement 113' befestigt, das für ein Einkoppeln von Pumplicht in ein Pump-Ende der Verstärkerfaser 119 ausgebildet ist.

Der Grundkörper 101A ist im Bereich des Faserführungsabschnitts 133 in mehrere Segmente untergliedert: ein Hauptsegment 102A und beispielhaft zwei Kreisabschnittssegmente 102B, 102C. Die Segmente sind über Segmentverbindungen 104 miteinander verbunden. Die Segmentverbindungen 104 sind jeweils über eine ein Festkörpergelenk und eine Befestigungshalterung umfassende Befestigungseinheit 103 an einer optischen Platte befestigbar.

Eine beispielhafte Segmentverbindung 104 ist in Fig. 15 gezeigt. Schienenartige Ringabschnitte des Hauptsegments 102A und des Kreisabschnittssegments 102B werden zueinander derart ausgerichtet, dass sich eine durchlaufende Aussparung 120 ergibt. Wie nachfolgend erläutert, verläuft die Lichtleitfaser kreisförmig mindestens einmal entlang der ringartig ausgebildeten Aussparung 120. Die Segmentenden werden über eine Deckplatte 140A und eine Unterplatte 140B aneinander geschraubt. Die Deckplatte 140A weist ferner eine Kammstruktur 142 auf. Die Kammstruktur 142 weist nebeneinanderliegende Aussparungen auf, in die sich die Faser je nach Länge anordnen kann. Die Kammstruktur 142 kann ferner federartig ausgebildet werden, um eine leichte Anpresskraft auf die Faser 119 bereitzustellen.

Die Unterplatte 140B weist beispielsweise an einer innenliegenden Längsseite ein Festkörpergelenk 144 auf. Das Festkörpergelenk 144 verbindet die Unterplatte 140B mit einem Befestigungsbereich 146, der an einer Befestigungshalterung 103 angeschraubt werden kann. Das Festkörpergelenk 144 erlaubt es, thermische Formveränderungen des Grundkörpers 101A zuzulassen, insbesondere ohne eine größere Verspannung hervorzurufen.

Ähnlich der eingangs beschriebenen Ausführungsform für hohe Leistungen erlaubt auch der Grundkörper 101A, insbesondere der Faserführungsabschnitt 133 und die darin vorgesehene Aussparung 120, einen kreisförmig und insbesondere spiralartig ausgebildeten Faserverlauf. Um auch in diesem Fall in die Überschneidung mit Abstand der jeweiligen Faserabschnitte zueinander zu gewährleisten, sind die Aufnahmeelemente 131, 131' derart ausgebildet, dass die Faserenden mit einem Höhenversatz von beispielsweise Δ_{H} von der Größe des Faserdurchmessers selbst (z.B. 0,25 mm) bis z.B. 4 mm die Faseraufhahmeelemente jeweils verlassen. In der gezeigten Ausführungsform sind die beiden Enden somit bis auf den Höhenversatz Δ_{H} identisch ausgerichtet. Wie in Fig. 14 gezeigt, umläuft die Lichtleitfaser 119 somit einen vollständigen Kreis (360°).

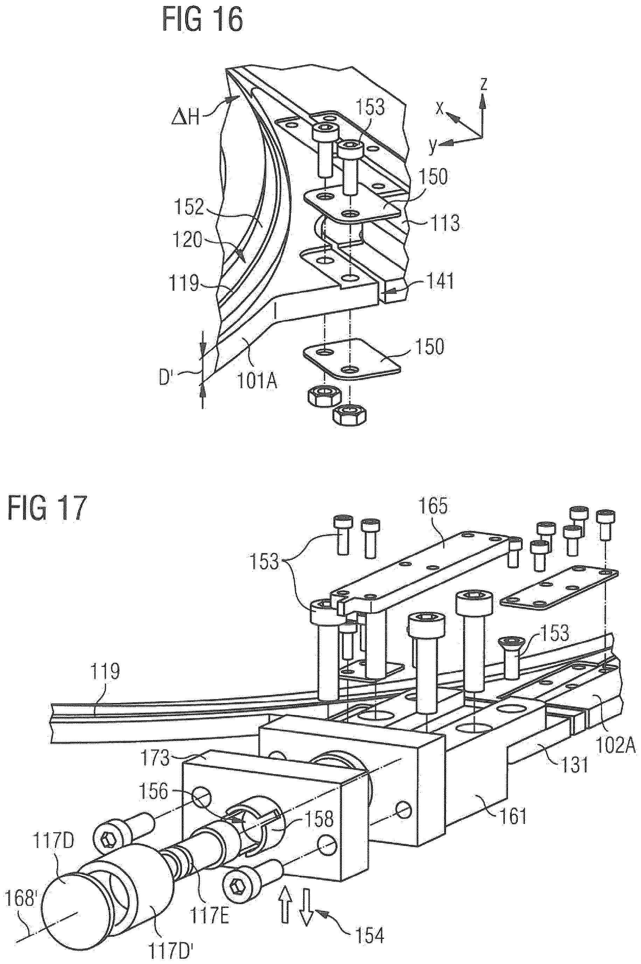

Aufgrund der geringeren Leistungen ist eine Wasserkühlung des Grundkörpers 101A beispielsweise nur im Bereich der Aufnahmeeinheiten vorgesehen. Im Bereich der Ringsegmente erfolgt die Kühlung primär über die Umgebungsluft und die Wärmeübertragung auf die beispielsweise aus Aluminium geformte Unterlage. Um insbesondere in den Endbereichen die Wärmeübertragung von der Faser auf das Hauptsegment 102A zu verbessern, können Abdeckkühlplatten 148, 148' im Anschluss an die Aufnahmeelemente 113, 113' vorgesehen werden (siehe auch Fig. 17). Beispielsweise kann die Abdeckkühlplatte 148' im Bereich des Aufnahmeelements auf der Pumpseite größtmöglich vorgesehen werden. Im Gegensatz dazu ist die Abdeckkühlplatte 148 aufgrund der im Bereich des Verbindungsabschnitts 135 vorgesehenen Einschnitte 141 kleiner ausgebildet.

Bei Verstärkersystemen für niedrige Leistung kann unter Umständen gänzlich auf eine Wasserkühlung verzichtet werden.

Die niedrigen bis mittleren Leistungen führen zu zwar geringeren thermischen Belastungen des Grundkörpers 101A, sodass insbesondere das Aufnahmeelement 113 auf der Seed-Seite über ein Festkörpergelenk von dem Faserführungsabschnitt 133 entkoppelt wird.

Da ferner aufgrund der geringeren Leistungen die thermischen Verformungen der Faseraufnahmeelemente geringer ausfällt, können diese unter Umständen direkt auf die Faserendbefestigungsabschnitte 131, 131' aufgeschraubt werden (siehe Fig. 16 und Fig. 17).

Beispielsweise kann zur Materialersparnis eine Dicke D' des Grundkörpers 101A in Z-richtung reduziert werden (beispielsweise auf wenige Millimeter). Dies kann allerdings zu einem Bewegungsfreiheitsgrad des Festkörpergelenks in Z-Richtung führen. Um diesen Freiheitsgrad zu blockieren, kann beispielsweise, wie in Fig. 16 gezeigt, ein Paar von Führungsplatten 150 vorgesehen werden, das beispielsweise den Einschnitt 141 teilweise überbrückt und somit eine Bewegung in Z-Richtung des Faserendbefestigungsabschnittes 131 verhindert. Beispielhaft ist die Befestigung der Führungsplatten 150 in Fig. 16 mit Schrauben 153 verdeutlicht.

Ferner erkennt man in Fig. 16 den sich auf der Auflagefläche 152 der Aussparung 120 erstreckenden Faser 119, wobei sich die Aussparung 120 in Richtung der Faseraufnahmeelemente 113, 113' hin verjüngt.

Fig. 17 ist eine Explosionszeichnung des Faseraufnahmeelements 113 gezeigt. Das Faseraufnahmeelement 113 weist eine Bodeneinheit 161 und eine Abdeckeinheit 165 auf, sowohl die Abdeckeinheit 165 kann mit der Bodeneinheit 161 als auch die Bodeneinheit 161 mit dem Faserendbefestigungsabschnitt 131 mit Schrauben 153 verschraubt werden.

Auf der Einkoppelseite der Bodeneinheit 161 ist ein Trägerelement 173 vorgesehen. Das Trägerelement 173 und/oder die Bodeneinheit 161 können beispielsweise mit Kühlkreisläufen, wie durch Pfeile 154 verdeutlicht, verbunden werden.

Das Trägerelement 173 weist entlang der Strahlachse 168' eine Durchgangsöffnung 156 auf. An der Innenwandseite der Durchgangsöffnung 156 kann beispielsweise eine zylinderförmige Absorberhülse 117E befestigt werden. Üblicherweise ist die Befestigung insbesondere auf einen guten Wärmekontakt ausgerichtet. Wie in der Ausführungsform für hohe Leistungen dient die Absorberhülse 117E der Entfernung der hochdivergenten Komponenten des austretenden Pumplaserlichts aus dem optischen System.

Einkoppelseitig erstreckt sich ein Befestigungsring 158 um die Durchgangsöffnung 156. Der Befestigungsring 158 kann beispielsweise mehrere Segmente aufweisen und dient der thermisch isolierten Befestigung einer Linsenhalterung 117D'. Die Linsenhalterung 117D' ist beispielsweise zylinderförmig ausgebildet, so dass an ihrer Frontseite eine Einkoppellinse 117D befestigt, beispielsweise angeklebt, werden kann.

Diese Anordnung erlaubt eine thermische Entkopplung der Linse 117D von der Absorberhülse 117E, so dass eine thermische Beeinflussung der Linse reduziert oder sogar vermieden werden kann.

Die hierin offenbarten Einkoppeleinheiten bestehen primär aus einem Einkoppellinsensystem und einer am Faserende optional angeordneten Endkappe; letzter wird bei höheren Leistungen besonders wichtig. Werden beispielsweise höhere Laserleistungen im Bereich von einigen 10 W bis mehrere 100 W (mittlere Leistung) erzeugt, sind weitere optische Elemente wie Kollimationslinse und Umlenkspiegel zusätzlich an die Einkoppeleinheit montierbar.

Die hierin offenbarte Lagerung des Aufnahmeelements über Kugeln kann eine zusätzliche thermische Isolierung des Aufnahmeelements von der Bodenfläche bewirken.

Die hierin offenbarte z.B. über der Tischplatte schwebende Lagerung der Plattformen kann einseitig oder beidseitig für Pump- als auch Seed-Laserstrahlung verwendet werden.

Zur Erleichterung der Wärmeabfuhr besteht das Faseraufnahmeelement z.B. aus einem Material mit einer hohen Wärmeleitfähigkeit (z.B. Kupfer).

Der hierin verwendete Begriff Faserhalterungseinheit umfasst unter anderem (insbesondere aktiv gekühlte) Faserhalterungskassetten, welche auch als Faserkühlkassetten bezeichnet werden.

In einem weiteren hierin offenbarten Aspekt weist eine Festkörpergelenkbefestigungshalterung eine Basis zum Befestigen derselben an einer optischen Platte und ein Oberteil zum Befestigen derselben an einem optischen Bauteil sowie mindestens ein Festkörpergelenk auf. In einigen Ausführungsformen weist eine Festkörpergelenkbefestigungshalterung ferner ein Mittelteil, das an seinem einen Ende mit der Basis und an seinem anderen Ende mit dem Oberteil über jeweils ein Festkörpergelenk verbunden ist, auf.

In einigen Weiterbildungen ist eine Absorberhülse derart positionierbar, dass aus dem Faserende austretendes Licht abgefangen wird, und weist insbesondere einen an einem Trägerelement angeordneten zylinderförmigen Abschnitt und/oder einen Trichterabschnitt auf, wobei ein spitzes Ende des Trichterabschnitts eine Öffnung aufweisen kann, die derart bezüglich der Faserendeposition angeordnet ist, dass aus dem Faserende austretendes Licht im Wesentlichen innerhalb der Strahlhülse propagiert und/oder wobei das Trägerelement insbesondere eine mit Kühlmittelanschlüssen verbindbare Kühlstruktur aufweist und/oder über ein isolierendes Element an der Plattform befestigt ist.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Faserhalterungseinheit (1) zum Bereitstellen einer Lichtleitfaser (19, 119) für ein Faserlasersystem mit
einem sich in einer Ebene erstreckenden Grundkörper (1A, 101A), der einen Faserendbefestigungsabschnitt (31A, 31B, 131), einen Faserführungsabschnitt (33, 133) und einen Verbindungsabschnitt (35A, 35B, 135) zwischen dem Faserendbefestigungsabschnitt (31A, 31B, 131) und dem Faserführungsabschnitt (33, 133) aufweist, wobei
der Faserendbefestigungsabschnitt (31A, 31B, 131) zur Befestigung eines einen Faserendbereich (19A) der Lichtleitfaser (19, 119) haltenden Aufnahmeelements (13, 113) ausgebildet ist,
der Faserführungsabschnitt (33, 133) zur Führung eines Fasermittelbereichs der Lichtleitfaser (19, 119) ausgebildet ist und eine Faserauflagefläche (152) zur ringartig geformten Anordnung der Lichtleitfaser (19, 119) auf der Faserauflagefläche aufweist und
der Verbindungsabschnitt (35A, 35B, 135) zwischen dem Faserendbefestigungsabschnitt (31A, 31B) und dem Faserführungsabschnitt (33) als Festkörpergelenk ausgebildet ist, das einen Bewegungsfreiheitsgrad des Faserführungsabschnitts (33, 133) bezüglich des Faserendbefestigungsabschnitts (31A, 31B, 131) in der Ebene bereitstellt.

2. Faserhalterungseinheit (1) nach Anspruch 1, wobei die Faserauflagefläche (152) zur wendelförmig oder spiralförmig geformten Anordnung der Lichtleitfaser (19, 119) auf der Faserauflagefläche ausgebildet ist.

3. Faserhalterungseinheit (1) nach Anspruch 1 oder Anspruch 2, wobei das Festkörpergelenk durch räumliche Trennung von Faserführungsabschnitt und Faserendbefestigungsabschnitt (31A, 31B, 131) und Materialreduzierung im Verbindungsabschnitt (35A, 35B, 135) ausgebildet ist.

4. Faserhalterungseinheit (1) nach einem der vorhergehenden Ansprüche, wobei der Faserendbefestigungsabschnitt (31A, 31B) auf einer Oberseite mit Vertiefungen (45) als Auflageflächen für Positionierkugeln (84A, 84B, 84C) des Aufnahmeelements (13, 113) und zum Befestigen des Aufnahmeelements (13, 113) ausgebildet ist und/oder
wobei der Faserendbefestigungsabschnitt (31A, 31B, 131) auf einer Unterseite eine Befestigungsfläche (11A, 11B) zum Befestigen einer Halterung (3A, 3B) aufweist.

5. Faserhalterungseinheit (1) nach einem der vorhergehenden Ansprüche, wobei der Faserführungsabschnitt (33, 133) ferner
einen sich zumindest abschnittsweise entlang eines Lichtleitfaserverlaufs erstreckenden Kühlkreislauf (37) und/oder
eine Nutstruktur (20) zur Lichtleitfaseraufnahme aufweist, und die Nutstruktur (20) optional eine Lamellenstruktur (23) zur Durchmesseranpassung eines Lichtleitfaserverlaufs an eine Faserlänge aufweist.

6. Faserhalterungseinheit (1) nach einem der vorhergehenden Ansprüche, wobei der Grundkörper (1, 101) ferner einen weiteren Faserendbefestigungsabschnitt (31A, 31B, 131) aufweist, der als Teil des Faserführungsabschnitts (33, 133) oder über einen weiteren oder den gleichen Verbindungsabschnitt (35A, 35B, 135) mit dem Faserführungsabschnitt (33, 133) verbunden ist.

7. Faserhalterungseinheit (1) nach einem der vorhergehenden Ansprüche, wobei der Faserführungsabschnitt (133) ein den Faserendbefestigungsabschnitt (31A, 31B, 131) aufweisendes Hauptsegment (102A) und mindestens ein Kreisabschnittsegmente (102B, 102C) sowie Segmentverbindungen (104) aufweist, wobei eine Segmentverbindung (104) optional eine den Lichtleitfaser (119) auf eine Faserauflagefläche (152) drückende Kammstruktur (142) zur Durchmesseranpassung eines Lichtleitfaserverlaufs an eine Faserlänge aufweist.

8. Faserlasereinheit mit
einer optischen Platte (5),
einer Faserhalterungseinheit (1, 101) mit einem Faserführungsabschnitt und einem Faserendbefestigungsabschnitt nach einem der Ansprüche 1 bis 7,
einer Lichtleitfaser (19, 119), und
und einem ein Ende der Lichtleitfaser aufnehmenden Aufnahmeelement (13, 113, 113'), wobei das Aufnahmeelement am Faserendbefestigungsabschnitt befestigt ist.

9. Faserlasereinheit nach Anspruch 8, wobei das Faseraufnahmeelement (13, 113, 113') aufweist:
eine sich entlang einer Längsrichtung erstreckende Bodeneinheit (61), die zur Befestigung an dem Faserendbefestigungsabschnitt (31A, 31B, 131) ausgebildet ist, und
eine zumindest teilweise die Bodeneinheit (61) abdeckende und auf der Bodeneinheit (61) angebrachte Abdeckeinheit (63),
wobei die Bodeneinheit (61) und die Abdeckeinheit (63) zur Aufnahme eines Endabschnitts (19A) einer Lichtleitfaser (19, 119) ausgebildet sind, so dass sich der Endabschnitt (19A) in Längsrichtung erstreckt und ein Faserende (67) der Lichtleitfaser (19, 119) an einer Kopplungsseite der Bodeneinheit (61) in einer Freistrahlkopplungsposition (87) positionierbar ist.

10. Faserlasereinheit nach Anspruch 9, wobei die Bodeneinheit (61) des Faseraufnahmeelements (13, 113, 113') und/oder die Abdeckeinheit (63) des Faseraufnahmeelements (13, 113, 113') eine lineare Nut zur Aufnahme des Endabschnitts (19A) der Lichtleitfaser aufweist und/oder aus einem wärmeableitenden Material ist.

11. Faserlasereinheit nach Anspruch 9 oder Anspruch 10, wobei das Faseraufnahmeelement (13, 113, 113') eine auf einer Einkopplungsseite an der Bodeneinheit (61) des Faseraufnahmeelements (13, 113, 113') befestigte Trägereinheit (173) zum Befestigen einer Absorberhülse (117E) und/oder einer Linseneinheit aufweist, und die Trägereinheit (173) und/oder die Bodeneinheit (61) optional eine mit Kühlanschlüssen verbindbare Kühlstruktur aufweist.

12. Faserlasereinheit nach einem der Ansprüche 9 bis 11, wobei die Bodeneinheit (61) umfasst
ein erstes Führungsschienensystem, das zum Führen einer thermischen Ausdehnbewegung des Faseraufnahmeelements entlang einer ersten Achse (86A) ausgebildet ist, die im Wesentlichen in Richtung des Endabschnitts (19A) ausgerichtet ist,
ein zweites Führungsschienensystem, das zum Führen einer thermischen Ausdehnbewegung entlang einer zweiten Achse (86B) ausgebildet ist, die im Wesentlichen unter einem Winkel kleiner 90° bezüglich der ersten Achse (86A) ausgerichtet ist, und
ein drittes Führungsschienensystem, das zum Führen einer thermischen Ausdehnbewegung entlang einer dritten Achse (86C) ausgebildet ist, die im Wesentlichen unter einem Winkel kleiner 90° bezüglich der ersten Achse (86A) ausgerichtet ist, und wobei die zweite Achse (86B) und die dritte Achse (86C) sich im Wesentlichen von der Freistrahlkopplungsposition (87) jeweils zu einer Seite und zu einer Auflageseite der Bodeneinheit (61) hin erstrecken und
wobei sich die erste, die zweite und die dritte Achse in der Freistrahlkopplungsposition (87) im Wesentlichen schneiden oderannähern.

13. Faserlasereinheit nach einem der Ansprüche 8 bis 12 ferner mit
mindestens einem starren Befestigungshalter (3A, 3B), der die optische Platte (5) mit dem Faserendbefestigungsabschnitt befestigt, und
mindestens einem Festkörpergelenkbefestigungshalterung (3C), der die optische Platte an dem Faserführungsabschnitt befestigt, wobei der Festkörpergelenkbefestigungshalterung (3C) ein Festkörpergelenk aufweist, das eine Relativbewegung der Faserhalterungseinheit (1) bezüglich der optischen Platte (5) aufgrund einer thermischen Verformung der Faserhalterungseinheit (1) erlaubt, und
wobei optional das Festkörpergelenk des Festkörpergelenkbefestigungshalters (3C) einen Freiheitsgrad bereitstellt, der nicht durch das Festkörpergelenk eines Verbindungsabschnitts (35) der Faserhalterungseinheit bereitgestellt wird.

14. Faserlasereinheit nach einem der Ansprüche 8 bis 13, ferner mit einem Optikplattformsystem (15), das mit dem Faserendbefestigungsabschnitt der Faserhalterungseinheit (1) fest verbunden ist und eine Plattform (7A, 7B) und optische Elemente aufweist, wobei die optischen Elemente als eine Freistrahleinkopplung ausgebildet sind, und
das einen Laserstrahl ortsfest bezüglich des Faserendbefestigungsabschnitts auf eine definierte Faserendeposition fokussiert.

15. Faserlasereinheit nach Anspruch 14, wobei der Faserendbefestigungsabschnitt (31A, 31B, 131) ferner zum Befestigen der Plattform (7A, 7B, 173) zur Aufnahme optischer Elemente eine Aussparung mit einer von Seitenwänden (51) begrenzten Bodenfläche (43) aufweist und wobei Vertiefungen (45) in der Bodenfläche (43) als Auflageflächen für Positionierkugeln (84A, 84B, 84C) des Aufnahmeelements (13, 113) und die Befestigung der Plattform (7A, 7B) an den Seitenwänden (51) vorgesehen ist.

## Claims

1. A fiber mounting unit (1) for providing an optical fiber (19, 119) for a fiber laser system, comprising:
a base body (1A, 101A) extending in a plane that includes a fiber end attachment section (31A, 31B, 131), a fiber guide section (33, 133), and a connection section (35A, 35B, 135) between the fiber end attachment section (31A, 31B, 131) and the fiber guide section (33, 133), wherein
the fiber end attachment section (31A, 31B, 131) is configured to attach a receiving element (13, 113) that receives a fiber end portion (19A) of the optical fiber (19, 119),
the fiber guide section (33, 133) is configured to guide a fiber central portion of the optical fiber (19, 119) and the fiber guide section has a fiber support surface (152) for arranging the optical fiber (19, 119) on the fiber support surface (152) in a ring-like shape and
the connection section (35A, 35B, 135) is configured between the fiber end attachment section (31A, 31B) and the fiber guide section (33) as a flexure bearing, which provides a degree of freedom of movement of the fiber guide section (33, 133) with respect to the fiber end attachment section (31A, 31B, 131) in the plane.

2. The fiber mounting unit (1) according to claim 1, wherein the fiber support surface (152) is configured for arranging the optical fiber on the fiber support surface (152) in a coil shape or a spiral shape.

3. The fiber mounting unit (1) according to claim 1 or claim 2, wherein the flexure bearing is formed by spatially separating the fiber guide section and the fiber end attachment section (31A, 31B, 131) and by material reduction in the connection section (35A, 35B, 135).

4. The fiber mounting unit (1) according to any one of the preceding claims, wherein the fiber end attachment section (31A, 31B) is provided, on an upper side, with depressions (45) as supporting areas for positioning balls (84A, 84B, 84C) of the receiving element (13, 113) and for attaching the receiving element (13, 113), and/or wherein the fiber end mounting portion (31A, 31B, 131) includes, on a bottom side, a mounting area (11A, 11B) for attaching a mount (3A, 3B).

5. The fiber mounting unit (1) according to any one of the preceding claims, wherein the fiber guide section (33, 133) further includes
a cooling circuit (37) extending at least in a section along an optical fiber path, and/or
a groove structure (20) for receiving the optical fiber, and the groove structure (20) has optionally a lamella structure (23) for adapting the diameter of an optical fiber path to a fiber length.

6. The fiber mounting unit (1) according to any one of the preceding claims, wherein the base body (1, 101) further includes
a further fiber end attachment section (31A, 31B, 131) that is connected to the fiber guide section (33, 133) as a part of the fiber guide section (33, 133) or via another or the same connection section (35A, 35B, 135).

7. The fiber mounting unit (1) according to any one of the preceding claims, wherein the fiber guide section (133) includes a main segment (102A) and at least one circular segment section (102B, 102C) as well as segment connections (104), wherein the main segment (102A) includes the fiber end attachment section (31A, 31B, 131) and wherein a segment connection (104) optionally includes a comb structure (142) pressing the optical fiber (119) onto a fiber support surface (152) for adapting the diameter of an optical fiber path to a fiber length.

8. A fiber laser unit comprising:
an optical plate (5),
a fiber mounting unit (1, 101) having a fiber guide section and a fiber end attachment section according to any one of claims 1 to 7,
an optical fiber (19, 119), and
a receiving element (13, 113, 113') adapted to receive an end of the optical fiber, wherein the receiving element is attached to the fiber end attachment section.

9. The fiber laser unit according to claim 8, wherein the fiber receiving element (13, 113, 113') includes
a bottom unit (61) extending along a longitudinal direction, wherein the bottom unit is configured for attachment to the fiber end attachment section (31A, 31B, 131), and
a covering unit (63) that is mounted on the bottom unit (61) to at least partially covers the bottom unit (61),
wherein the bottom unit (61) and the covering unit (63) are configured to receive an end portion (19A) of an optical fiber (19, 119) so that the end portion (19A) extends along the longitudinal direction and a fiber end (67) of the optical fiber (19, 119) is positionable at a coupling side of the bottom unit (61) in a free-beam coupling position (87).

10. The fiber laser unit according to claim 9, wherein the bottom unit (61) of the fiber receiving element (13, 113, 113') and/or the covering unit (63) of the fiber receiving element (13, 113, 113') includes a linear recess for receiving the end portion (19A) of the optical fiber and/or is made of a heat dissipating material.

11. The fiber laser unit according to claim 9 or claim 10, wherein the fiber receiving element (13, 113, 113') includes a support unit (173), which is attached to the bottom unit (61) of the fiber receiving element (13, 113, 113') on a coupling side, for attaching an absorber sleeve (117E) and/or a lens unit, and
the support unit (173) and/or the bottom unit (61) has optionally a cooling structure connectable to cooling connections.

12. The fiber laser unit according to any one of the claims 9 to 11, wherein the bottom unit (61) includes
a first guide rail system configured to guide a thermal expansion movement of the fiber receiving element along a first axis (86A), wherein the first axis is oriented substantially in the direction of the end portion (19A),
a second guide rail system configured to guide a thermal expansion movement along a second axis (86B), wherein the second axis is oriented substantially at an angle less than 90° with respect to the first axis (86A), and
a third guide rail system configured to guide a thermal expansion movement along a third axis (86C), wherein the third axis is oriented substantially at an angle less than 90° with respect to the first axis (86A), and wherein the second axis (86B) and the third axis (86C) extend substantially from the free-beam coupling position (87) each to a side and to a support side of the bottom unit (61) and
wherein the first, second and third axes substantially intersect or approach each other in the free-beam coupling position (87).

13. The fiber laser unit according to any one of the claims 8 to 12, further comprising:
at least one rigid mount (3A, 3B) attaching the optical plate (5) to the fiber end attachment section, and
at least one flexure bearing mount (3C) attaching the optical plate to the fiber guide section, wherein the flexure bearing mount (3C) includes a flexure bearing, which allows relative movement of the fiber mounting unit (1) with respect to the optical plate (5) due to thermal deformation of the fiber mounting unit (1), and
wherein optionally the flexure bearing of the flexure bearing mount (3C) provides a degree of freedom that is not provided by the flexure bearing of a connection section (35) of the fiber mounting unit.

14. The fiber laser unit according to any one of the claims 8 to 13, further comprising:
an optical platform system (15), which is fixedly connected to the fiber end attachment section of the fiber mounting unit (1), and includes a platform (7A, 7B) and optical elements, wherein the optical elements are configured as a free-beam coupling, and wherein the optical platform system focusses a laser beam stationary with respect to the fiber end attachment section onto a defined fiber end position.

15. The fiber laser unit according to claim 14, wherein the fiber end attachment section (31A, 31B) further includes a recess with a bottom surface (43) delimited by side walls (51), wherein the recess is configured for attaching the platform (7A, 7B) for receiving optical elements, and wherein depressions (45) are provided in the bottom surface (43) as supporting areas for positioning balls (84A, 84B, 84C) of the receiving element (13, 113) and the attachment of the platform (7A, 7B) is provided at the side walls (51).

## Revendications

1. Unité de maintien de fibre optique (1) pour la préparation d'une fibre optique (19, 119) pour un système laser à fibre avec
un corps de base (1A, 101A), s'étendant dans un plan, qui comporte une section de fixation d'extrémité de fibre (31A, 31B, 131), une section de guidage de fibre (33, 133) et une section de liaison (35A, 35B, 135) entre la section de fixation d'extrémité de fibre (31A, 31B, 131) et la section de guidage de fibre (33, 133), sachant que
la section de fixation d'extrémité de fibre (31A, 31B, 131) est constituée pour la fixation d'un élément de réception (13, 113) maintenant une zone d'extrémité de fibre (19A) de la fibre optique (19, 119),
la section de guidage de fibre (33, 133) est constituée pour le guidage d'une zone médiane de fibre de la fibre optique (19, 119) et comporte une surface de dépose de fibre (152) pour la disposition de forme annulaire de la fibre optique (19, 119) sur la surface de dépose de fibre et
la section de liaison (35A, 35B, 135) est constituée entre la section de fixation d'extrémité de fibre (31A, 31B) et la section de guidage de fibre (33) comme une articulation à corps solide, qui fournit dans le plan un degré de liberté de mouvement de la section de guidage de fibre (33, 133) par rapport à la section de fixation d'extrémité de fibre (31A, 31B, 131).

2. Unité de maintien de fibre optique (1) selon la revendication 1, sachant que la surface de dépose de fibre (152) est constituée pour la disposition de forme hélicoïdale ou en spirale de la fibre optique (19, 119) sur la surface de dépose de fibre.

3. Unité de maintien de fibre optique (1) selon la revendication 1 ou la revendication 2, sachant que l'articulation à corps solide est constituée par la séparation spatiale de la section de guidage de fibre et de la section de fixation d'extrémité de fibre (31A, 31B, 131) et la réduction de matériau dans la section de liaison (35A, 35B, 135).

4. Unité de maintien de fibre optique (1) selon l'une quelconque des revendications précédentes, sachant que la section de fixation d'extrémité de fibre (31A, 31B) est constituée sur une face supérieure avec des cavités (45) en tant que surfaces de dépose pour les sphères de positionnement (84A, 84B, 84C) de l'élément de réception (13, 113) et pour la fixation de l'élément de réception (13, 113) et/ou
sachant que la section de fixation d'extrémité de fibre (31A, 31B, 131) comporte sur une face inférieure, une surface de fixation (11A, 11B) pour fixer un support (3A, 3B).

5. Unité de maintien de fibre optique (1) selon l'une quelconque des revendications précédentes, sachant que la section de guidage de fibre (33, 133) comporte en plus
un circuit de refroidissement (37) s'étendant au moins pour partie le long d'un parcours de fibre optique et/ou
une structure rainurée (20) pour la réception de fibre optique et la structure rainurée (20) comporte en option une structure lamellaire (23) pour l'adaptation diamétrale d'un parcours de fibre optique à une longueur de fibre.

6. Unité de maintien de fibre optique (1) selon l'une quelconque des revendications précédentes, sachant que le corps de base (1, 101) comporte en plus une autre section de fixation d'extrémité de fibre (31A, 31B, 131), qui est reliée en tant que partie de la section de guidage de fibre (33, 133) ou par le biais d'une section de liaison autre ou identique (35A, 35B, 135) à la section de guidage de fibre (33, 133).

7. Unité de maintien de fibre optique (1) selon l'une quelconque des revendications précédentes, sachant que la section de guidage de fibre (133) comporte un segment principal (102A) comportant la section de fixation d'extrémité de fibre (31A, 31B, 131) et au moins un segment de section circulaire (102B, 102C) ainsi que des liaisons de segment (104), sachant qu'une liaison de segment (104) comporte en option une structure en forme de peigne (142) appuyant la fibre optique (119) sur une surface de dépose de fibre (152) pour l'adaptation diamétrale d'un parcours de fibre optique à une longueur de fibre.

8. Unité de laser à fibre avec
une plaque optique (5),
une unité de maintien de fibre (1, 101) avec une section de guidage de fibre et une section de fixation d'extrémité de fibre selon l'une quelconque des revendications 1 à 7,
une fibre optique (19, 119) et
un élément de réception (13, 113, 113') recevant une extrémité de la fibre optique, sachant que l'élément de réception est fixé à la section de fixation d'extrémité de fibre.

9. Unité de laser à fibre optique selon la revendication 8, sachant que l'élément de réception de fibre (13, 113, 113') comporte :
une unité de fond (61) s'étendant le long d'une direction longitudinale, qui est constituée pour la fixation à la section de fixation d'extrémité de fibre (31A, 31B, 131), et
au moins une unité de couverture (63) couvrant au moins pour partie l'unité de fond (61) et montée sur l'unité de fond (61),
sachant que l'unité de fond (61) et l'unité de couverture (63) sont constituées pour la réception d'une section d'extrémité (19A) d'une fibre optique (19, 119) de telle manière que la section d'extrémité (19A), s'étend dans la direction longitudinale et une extrémité de fibre (67) de la fibre optique (19, 119) peut être positionnée sur un côté de couplage de l'unité de fond (61) dans une position de couplage par rayonnement libre (87).

10. Unité de laser à fibre selon la revendication 9, sachant que l'unité de fond (61) de l'élément de réception de fibre (13, 113, 113') et/ou l'unité de couverture (63) de l'élément de réception de fibre (13, 113, 113') comporte une rainure linéaire pour recevoir la section d'extrémité (19A) de la fibre optique et/ou est en matériau dissipateur de chaleur.

11. Unité de laser à fibre selon la revendication 9 ou la revendication 10, sachant que l'élément de réception de fibre (13, 113, 113') comporte une unité de support (173) fixée sur un côté de couplage à l'unité de fond (61) de l'élément de réception de fibre (13, 113, 113') pour la fixation d'un manchon d'absorbeur (117E) et/ou d'une unité à lentille et l'unité de support (173) et/ou l'unité de fond (61) comporte en option une structure de refroidissement pouvant être reliée à des raccords de refroidissement.

12. Unité de laser à fibre selon l'une quelconque des revendications 9 à 11, sachant que l'unité de fond (61) comprend
un premier système à rail de guidage, qui est constitué pour guider un mouvement d'expansion thermique de l'élément de réception de fibre le long d'un premier axe (86A), qui est orienté pour l'essentiel en direction de la section d'extrémité (19A),
un deuxième système à rail de guidage, qui est constitué pour guider un mouvement d'expansion thermique le long d'un deuxième axe (86B), qui est orienté pour l'essentiel dans un angle plus petit que 90° par rapport au premier axe (86A), et
un troisième système à rail de guidage, qui est constitué pour guider un mouvement d'expansion thermique le long d'un troisième axe (86C), qui est orienté pour l'essentiel dans un angle plus petit que 90° par rapport au premier axe (86A), et sachant que
le deuxième axe (86B) et le troisième axe (86C) s'étendent pour l'essentiel de la position de couplage par rayonnement libre (87) respectivement vers un côté et vers un côté de dépose de l'unité de fond (61) et sachant que le premier, le deuxième et le troisième axe se coupent ou se rapprochent pour l'essentiel dans la position de couplage par rayonnement libre (87).

13. Unité de laser à fibre selon l'une quelconque des revendications 8 à 12, avec en plus
au moins un support de fixation rigide (3A, 3B), qui fixe la plaque optique (5) à la section de fixation d'extrémité de fibre, et
au moins un support de fixation d'articulation à corps solide (3C), qui fixe la plaque optique à la section de guidage de fibre, sachant que le support de fixation d'articulation à corps solide (3C) comporte une articulation à corps solide, qui permet un mouvement relatif de l'unité de maintien de fibre (1) par rapport à la plaque optique (5) en raison d'une déformation thermique de l'unité de maintien de fibre (1), et
sachant qu'en option l'articulation à corps solide du support de fixation à articulation à corps solide (3C) fournit un degré de liberté, qui n'est pas fourni par l'articulation à corps solide d'une section de liaison (35) de l'unité de maintien de fibre.

14. Unité de laser à fibre selon l'une quelconque des revendications 8 à 13, avec en plus un système de plateforme optique (15), qui est fermement relié à la section de fixation d'extrémité de fibre de l'unité de maintien de fibre (1) et comporte une plateforme (7A, 7B) et des éléments optiques, sachant que les éléments optiques sont constitués comme un couplage par rayonnement libre, et
concentre un rayonnement laser fixement par rapport à la section de fixation d'extrémité de fibre sur une position d'extrémité de fibre définie.

15. Unité de laser à fibre selon la revendication 14, sachant que la section de fixation d'extrémité de fibre (31A, 31B, 131) comporte en plus un évidement avec une surface de fond (43) limitée par des parois latérales (51) pour la fixation de la plateforme (7A, 7B, 173) pour loger des éléments optiques et sachant que des cavités (45) sont prévues dans la surface de fond (43) en tant que surfaces de dépose pour les sphères de positionnement (84A, 84B, 84C) de l'élément de réception (13, 113) et la fixation de la plateforme (7A, 7B) aux parois latérales (51).
